# EUROPEAN PATENT APPLICATION

(11) **EP 1 237 086 A2**
(43) Date of publication of application: **04.09.2002**
(21) Application number: 02250936.8
(22) Date of filing: 12.02.2002
(51) Int. Cl.: G06F 11/14

(54) **Method and apparatus to migrate data using concurrent archive and restore**

(30) Priority: 28.02.2001 US 796145
(71) Applicant: NCR INTERNATIONAL INC., Dayton, Ohio 45479 (US)
(72) Inventor: Tarenskeen, Herbert J, Escondido, CA 92026 (US)
(74) Representative: Cleary, Fidelma

(57) **Abstract**

A system and method for migrating data from a source database system and a target database system includes a first utility module (e.g., an archive utility) and a second utility module (e.g., a restore utility) that are concurrently active. The first and second utility modules communicate through a buffer, shared memory, or pipe, to enable relatively fast data transfer (e.g., archive/restore, archive/copy, or other data transfer) between the first and second utility modules.

## Description

The invention relates to methods and apparatus to migrate data using concurrent archive and restore.

A database is a collection of stored data that are logically related and that are accessible by one or more users. A popular type of database system is the relational database management system, which includes relational tables made up of rows and columns. Each row represents an occurrence of an entity defined by the table, with an entity being a person, place, or thing about which the table contains information.

Administrators of database systems often archive contents of the systems for various reasons. For example, archiving and restoring data are steps that occur in migrating data from one database system (the source system) to another database system (the target system).

The archive and restore procedure traditionally involves transferring data from the source database system to a storage medium such as a tape or disk. Normally, if large amounts of data (e.g., gigabytes or terabytes of data) are involved, conventional systems archive the data to tape. The archived data is then loaded from the tape onto the target database system. Such conventional techniques for archiving and restoring data between two different systems involve duplication of both labor and components.

The data from the source database system is backed up (archived) to the tape or disk and, via manual operator intervention, the tape or disk is then exported from the source system and imported into the target database system. The data from the source database system, which is contained on the tape or disk, can then be restored to the target database system. The archive, tape or disk export, tape or disk import, and restore steps are all individual single-threaded steps. Each individual step needs to complete in sequence before the next step can be initiated. For very large database systems, higher data migration transfer speeds can be obtained by executing, concurrently and in parallel, as many of these single-threaded archive/export/import/restore activities as can be supported by both systems. However, the optimum number of these concurrent and parallel activities may be restricted and limited by the actual hardware that is available on both the source and target database systems. Generally, even though each of the archive and restore activities can be executed on a parallel machine, the archive operation is completed first before the restore operation is started, resulting in added delay in the archive/restore procedure.

Consequently, migrating large amounts of data from one system to another can take a very long time.

From a first aspect, the invention resides in a system comprising one or more control units, a transfer medium, a first module executable on the one or more control units to receive data for archiving from a first database, the first module to communicate the received data to the transfer medium and a second module executable on the one or more control units to receive data from the transfer medium and to transfer the received data into a second database.

The first and second modules are preferably concurrently active and the transfer medium preferably comprises a buffer, the first module to write to the buffer and the second module to read from the buffer.

The transfer medium may communicate data in a stream, the first module to provide the data to one end of the stream and the second module to receive data on another end of the stream and may comprise any one of a first-in-first-out buffer, a UNIX pipe, a shared memory or one or more high-speed volatile storage devices.
The first module preferably comprises an archive utility and the second module comprises a restore utility. The first module may be executable to further provide an indication of an amount of archive data to transfer through the transfer medium and to send requests for at least a portion of a relational table from the first database to archive or to an access module in a source database system containing the first database.

The system preferably comprises plural nodes, the first and second module resident on each of the plural nodes. The plural nodes may be part of a source database system in which the first database is contained or part of a target database system in which the second database is contained.

The system may also comprise at least one interface to a first database system containing the first database and to a second database system containing the second database.

The invention may also be defined in terms of a system comprising a memory, an archive module adapted to receive data from a first database and to write the data to the memory and a restore module adapted to receive the data from the memory and to transfer the data to a second database, the archive and restore modules being concurrently active.

From a further aspect, the invention resides in a method of migrating data from a first database to a second database, comprising executing an archive module to read archive data from a first database, writing, by the archive module, the archive data to a memory, executing a restore module, reading, by the restore module, the archive data from the memory and transferring, by the restore module, the archive data to a second database.

Writing the data to the memory comprises writing the data to one of a first-in-first-out buffer, a shared memory, or a UNIX pipe. The archive module and restore module are preferably executed concurrently.

From yet another aspect, the invention resides in an article comprising at least one storage medium containing instructions that when executed cause a system to archive data from a first database, transfer the archived data to a buffer, receive the archived data from the buffer and restore the archived data to a second database.

The invention also resides in a system comprising an operating system, a pipe managed by the operating system, an archive module and a restore module, the archive module adapted to transfer archive data from a first database to the pipe and the restore module adapted to receive the archive data from the pipe and to restore the received archive data into a second database, the archive and restore modules being concurrently active in the system.

Other or alternative features will become apparent from the following description, from the drawings, and from the claims.

Embodiments of the invention will now be described with reference to the accompanying drawings in which:
Fig. 1 is a block diagram of an embodiment of a data migration system that includes a source database system and a target database system.
Figs. 2, 3, and 4 are block diagrams of other embodiments of data migration systems.
Fig. 5 is a message flow diagram of a procedure performed in migrating data from a source database system to a target database system.

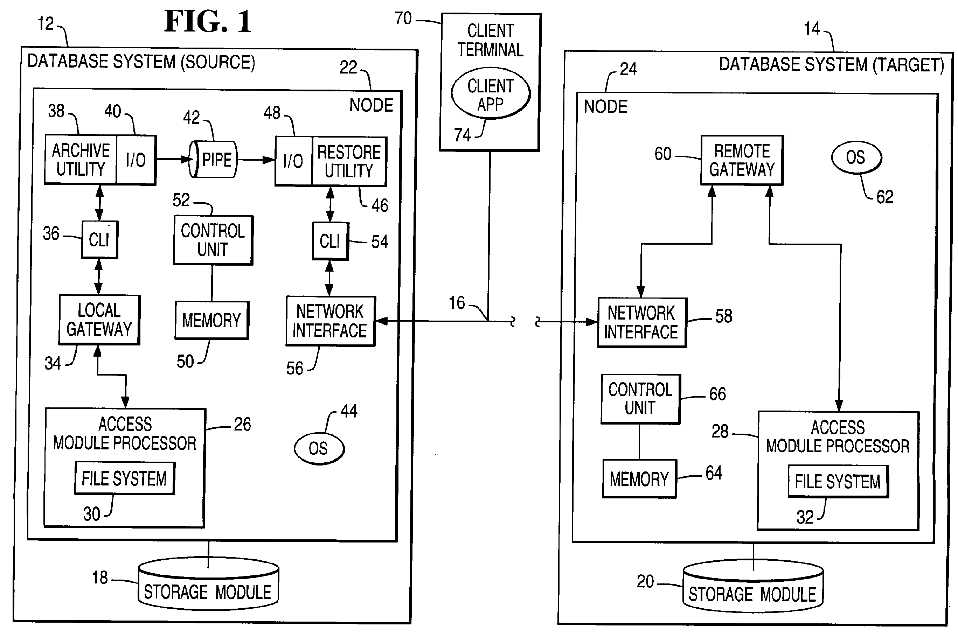

Fig. 1 illustrates a source database system 12 and a target database system 14 that are interconnected by a data network 16. Examples of the data network 16 include a local area network (LAN), a wide area network (WAN), or a public network (such as the Internet). The database system 12 is designated as the source database system because, in the example of Fig. 1, data in a storage module 18 of the source database system 12 is archived. The database system 14 is designated as the target database system because archived data from the source database system is migrated to a storage module 20 in the target database system 14. In accordance with an embodiment of the invention, the migration occurs over the data network 16. Although referred to in the singular, "storage module" can refer to one or plural storage devices, such as hard disk drives, disk arrays, tape drives, and other magnetic, optical, or other type of media. The designation of source database system and target database system can be switched if migration of data is from the database system 14 to the database system 12.

In each of the database systems 12 and 14, a node 22 or node 24, respectively, enables the access of data within the storage module 18 or 20, respectively. If the database systems 12 and 14 are relational database management systems (RDBMS), then data is stored in relational tables in storage modules 18 and 20. In accessing data contained in the relational tables, a query coordinator or parsing engine in each node 22 and 24 receives database queries and parses these queries into steps for reading, updating, or deleting data from the storage module 18 or 20. The database queries typically arrive as statements in a standard database-query language, such the Structured Query Language (SQL) defined by the American National Standards Institute (ANSI).

Each node 22 or 24 includes a respective access module processor 26 or 28. Although only one access module processor is shown in each node in Fig. 1, other embodiments can include plural access module processors, which are software components executable in each node. If plural access module processors are present on a node, each access module processor is responsible for a separate portion of data contained in the storage module attached to the node.

Each access module processor 26 or 28 controls access to data stored in the storage module 18 or 20 through a respective file system 30 or 32. If plural access module processors are present in the node 22, then plural storage modules 18 are attached to the respective access module processors. The plural storage modules are not necessarily physically separate devices, but instead, can be separate partitions or other portions of a physical storage system.

Each access module processor 26 or 28 includes a database manager that locks databases and tables; creates, modifies, or deletes definitions of tables; inserts, deletes, or modifies rows within the tables; and retrieves information from definitions and tables. The file system 30 or 32 performs the actual physical access of the storage module 18 or 20.

In accordance with some embodiments of the invention, a relatively fast archive and restore mechanism is provided in the node 22 of the source database system 12. Generally, the archive and restore mechanism in accordance with some embodiments involves the concurrent execution of an archive process and a restore process, with a relatively fast transfer medium defined between the archive and restore processes.

The node 22 in the source database system 12 includes a gateway 34 (designated as the local gateway). The gateway generally manages communications between a utility or application, such as an archive utility module 38, and the database software (including one or more access module processors 26). In one embodiment, the gateway 34 establishes and manages sessions (in response to a number of sessions specified by a user) during which the one or more access module processors 26 perform database access operations for the utility or application. A directive, such as one issued by a user from a client terminal 70 in a script executed by a client application 74, can indicate if all or a subset of access module processors are selected for communication with the utility or application in the node 22. The script executed by the client application 74 can also specify an identifier of the gateway (assuming plural gateways are present in the database system 12) to use in performing session management.

The archive utility module 38 issues archive requests to the access module processor(s) 26 through a call level interface (CLI) application programming interface (API) 36. The archive utility module 38 includes an input/output (I/O) layer 40 that is capable of communicating with a transfer medium 42.

In one embodiment, the node 22 runs a UNIX operating system (OS) 44. Alternatively, other types of operating systems can be employed in the node 22. In an embodiment in which the operating system is a UNIX operating system, the archive utility module 38 is a UNIX process, as are other software components in the node 22. The node 22 also includes a restore utility module 46, which contains an I/O layer 48 for communicating with the transfer medium 42. In one embodiment, the transfer medium 42 is a UNIX pipe, which is a file type defined in a UNIX system. A pipe allows the transfer of data between UNIX processes in a first-in-first-out (FIFO) manner. There are currently two kinds of UNIX pipes: a named pipe and an un-named pipe. A named pipe and an un-named pipe are similar except for the manner in which they are initialized and how processes can access the pipe. A writer process (such as the archive utility module 38) writes into one end of a pipe and a reader process (such as the restore utility module 46) reads from the other end of the pipe. There can be greater than one writer and reader process of a pipe. In the following description, it is assumed that the operating system 44 is a UNIX operating system and that the archive and restore utility modules 38 and 46 are UNIX processes. In other types of systems, other types of operating systems and processes, threads, or execution entities can be employed.

In another embodiment, the transfer medium 42 includes a buffer, such a buffer allocated in a memory 50 of the node 22. In yet another embodiment, the transfer medium 42 includes a shared memory accessible by plural processes.

The archive utility module 38 converts data retrieved from the storage module 18 into archive blocks of data, which are then written through the I/O layer 40 to the pipe 42. The restore utility module 46 receives the blocks of data from the pipe 42 through the I/O layer 48. In one embodiment, the archive utility module 38 and restore utility module 46 are different instantiations of the same software code. Different input strings are provided during different instantiations of the software code to cause one instance to behave as an archive process while another instance behaves as a restore process.

The restore utility module 46 outputs the restored data through a CLI 54, a network interface 56, and the data network 16 to the target database system 14. The network interface 56 includes various layers to enable communications over the network 16. For example, the layers include physical and data link layers, which can be in the form of a network adapter (e.g., an Ethernet adapter). Also, in one example, the layers include an Internet Protocol (IP) and Transmission Control Protocol (TCP) or User Datagram Protocol (UDP) stack. One version of IP is described in Request for Comments (RFC) 791, entitled "Internet Protocol," dated September 1981; and another version is described in RFC 2460, entitled "Internet Protocol, Version 6 (IPv6) Specification" dated December 1998. TCP is described in RFC 793, entitled "Transmission Control Protocol," dated September 1981; and UDP is described in RFC 768, entitled "User Datagram Protocol," dated August 1980. TCP and UDP are transport layers for managing connections between network elements over an IP network.

The node 24 also includes a network interface 58 that is coupled to the data network 16. The network interface 58 includes the same or similar layers as the network interface 56. In addition, a gateway 60 (designated as the remote gateway) resides in the node 24. The remote gateway 60 provides functions that are similar to those of the local gateway 34 in the source database system 12. The remote gateway 60 receives restored data from the restore utility module 46 through the network interface 58. The remote gateway 60 then provides the data to the access module processor 28, which writes the data into the storage module 20 through the file system 32.

An operating system 62 also resides in the node 24. In one example, the operating system 62 is a UNIX operating system, although other types of operating systems can be employed in further embodiments. The various software components of the node 24 are executable on a control unit 66, which is coupled to a memory 64 for storing data and instructions. Similarly, in the node 22 of the source database system 12, software components are executable on a control unit 52, which is coupled to the memory 50.

A benefit of the archive and restore mechanism in the node 22 of Fig. 1 is that input and output data transfers to an external tape drive or hard disk drive is not needed. By transferring data through a pipe created or defined by the archive utility 38 and managed by the operating system 44, high data transfer rates can be accomplished between the archive and restore utility modules 38 and 46. This is due to the fact that the pipe is defined in the main memory of the node. Consequently, data transfers to a disk or other relatively slow storage device can be avoided. Another benefit offered by the pipe 42 is that the archive and restore utility modules 38 and 46 can be run concurrently (with one writing archive data into the pipe 42 and the other reading the archive data from the pipe 42 for output through the network interface 56 to the target database system 14). As a result, the requirement that an archive process complete in its entirety before the restore process is started can be avoided, which provides substantial time savings. The archive and restore utilities are run concurrently as separate processes or threads to enable the concurrency of execution. Also, by using the pipe 42 in accordance with some embodiments, the need for physically moving media (e.g., tape, disk) from the source database system to the target database system can be avoided.

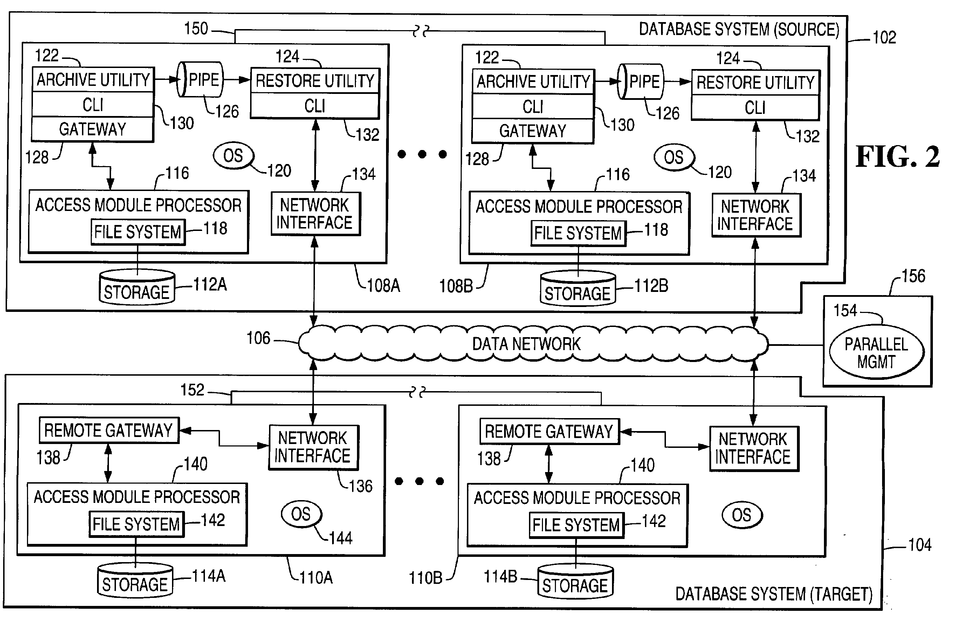

Fig. 2 illustrates another embodiment of a source database system 102 and a target database system 104. Again, the designation of source and target depends on which system contains data to be archived and which system the archived data is to be restored to.

Each of the source and target database systems 102 and 104 includes plural nodes. In an alternative arrangement, instead of a plural-node system, a single-node system having plural processors (such as a symmetrical multiprocessing or SMP system) can be used. The source database system 102 includes nodes 108A and 108B (some other embodiments may have more nodes), and the target database system 104 includes nodes 110A and 110B. Nodes 108A and 108B are associated with storage modules 112A and 112B, respectively, while nodes 110A and 110B are associated with storage modules 114A and 114B, respectively. Each of the nodes 108A and 108B includes one or more access module processors 116 that control the definition and access (through one or more file systems 118) of tables stored in a respective storage module 112. If plural access module processors are present in a node, plural storage modules can be attached to respective plural access module processors. In addition, each node 108 also includes an operating system 120, such as a UNIX operating system or some other type of operating system.

Each node 108 of the source database system 102 also includes an archive utility module 122 and a restore utility module 124. The archive and restore utility modules 122 and 124 communicate through a transfer medium 126, which can be a UNIX pipe, in one example. Each of the utility modules 122 and 124 also includes an I/O layer (not shown) similar to the I/O layer 40 or 48 in Fig. 1. The archive utility module 122 communicates with the one or more access module processors 116 through a local gateway 128 and a CLI API 130. The restore utility module 124 communicates with one or more access module processors 140 in a node 110 of the target database system 104 through a CLI API 132 and network interface 134 in the node 108, a data network 106 between the source and target database systems, and a network interface 136 and remote gateway 138 in the node 110. Alternatively, instead of connecting the nodes 108 of the source database system 102 with corresponding nodes 110 of the target database system 104, as depicted in Fig. 2, individual links (e.g., cables or wireless links) can be used to connect each pair of nodes 108, 110 by a point-to-point connection. Use of separate point-to-point connections provide even higher data transfer throughput.

In the target database system 104, each node 110 includes one or more access module processors 140 that control the creation, definition and access (through a file system 142) of tables in respective storage modules 114. In addition, an operating system 144 resides in each of the nodes 110A, 110B of the target database system 104.

In the source database system 102, each gateway 128 establishes and manages parallel sessions to enable communication of the archive utility 122 with many access module processors 116, which may reside on plural nodes. Communication between the local gateway 128 and the access module processors 116 are performed over a communications layer, which includes an interconnect link 150 and local links or buses in each node 108.

Similarly, for the restore utility 124, a remote gateway 138 manages communication with access module processors on plural nodes through a communications layer, which includes an interconnect link 152 and local links in the nodes 110.

The archive and restore mechanism in the Fig. 2 embodiment is similar to the archive and restore mechanism described in connection with Fig. 1, except that the archive and restore mechanism of Fig. 2 resides on plural nodes to enable parallel processing of the archive and restore procedure. Each access module processor 116 of the source database system 102 is responsible for a different portion of a given table stored in a respective storage module 112. Thus, the archive and restore utility module in the plural nodes perform archive and restore operations on different portions of a table in parallel, which enhances the data transfer rate of data migration from the source database system to the target database system.

In the example arrangement of Fig. 2, archive data from the storage module 112A is transferred from the archive utility module 122 to the restore utility module 124 in the node 108A. The archive data is then transferred by the restore utility module 124 to the node 110A in the target database system 104. Similarly, archive data from the storage module 112B is communicated by the restore utility 124 in node 108B to node 110B in the target database system. If redistribution of data is needed in the target database system, then the access module processors 140 in the nodes 110A, 110B handle the redistribution of such data across the storage modules 114A and 114B through the interconnect layer 152.

A parallel job management module 150 manages the parallel archive and restore mechanism in the embodiment of Fig. 2. In the illustrated embodiment, the parallel job management module 154 is run in a separate system 156 (which can be a client terminal used by an operator to control the archive and restore operation). The system 156 is connected to the source or target system through the data network 106. Alternatively, the parallel job management module 154 can be run on a node in either the source or target database system (using each system's respective interconnect 150 or 152 to manage parallel operations on the nodes), or on both the source and target database systems. The parallel job management module 154 divides the archive and restore job into separate portions for execution by the plural archive and restore modules to balance the workload.

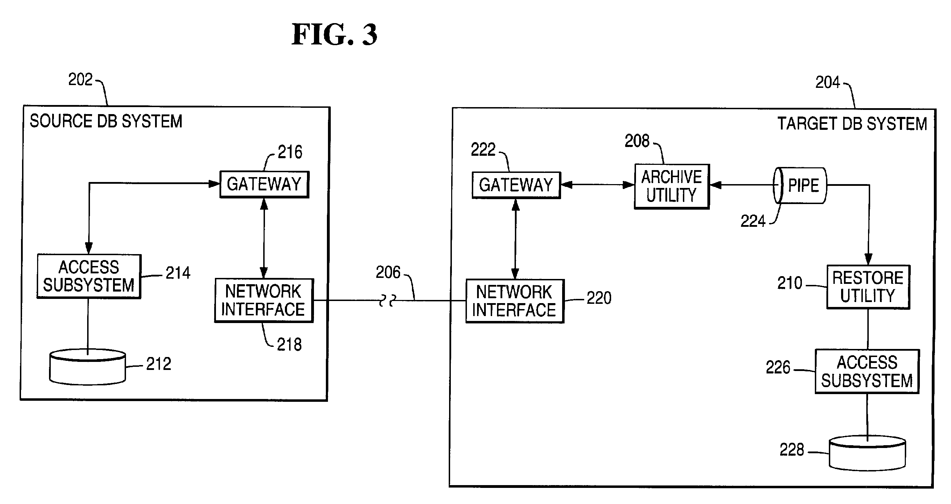

Fig. 3 shows another embodiment of a system for performing migration of data in which an archive utility module 208 and a restore utility module 210 are resident on a target database system 204 instead of a source database system 202. The source database system 202 is interconnected to the target database system 204 over a data network 206. The source database system includes a storage module 212, an access subsystem 214 (including one or more access module processors similar to those described in Figs. 1 and 2), a gateway 216 (in this case the remote gateway), and a network interface 218.

The target database system 204 includes a network interface 220, a gateway 222 (in this case a local gateway), the archive utility 208 and the restore utility 210. The archive and restore utilities communicate through a transfer medium 224 (e.g., a UNIX pipe). The target database system 204 also includes an access subsystem 226 and a storage module 228.

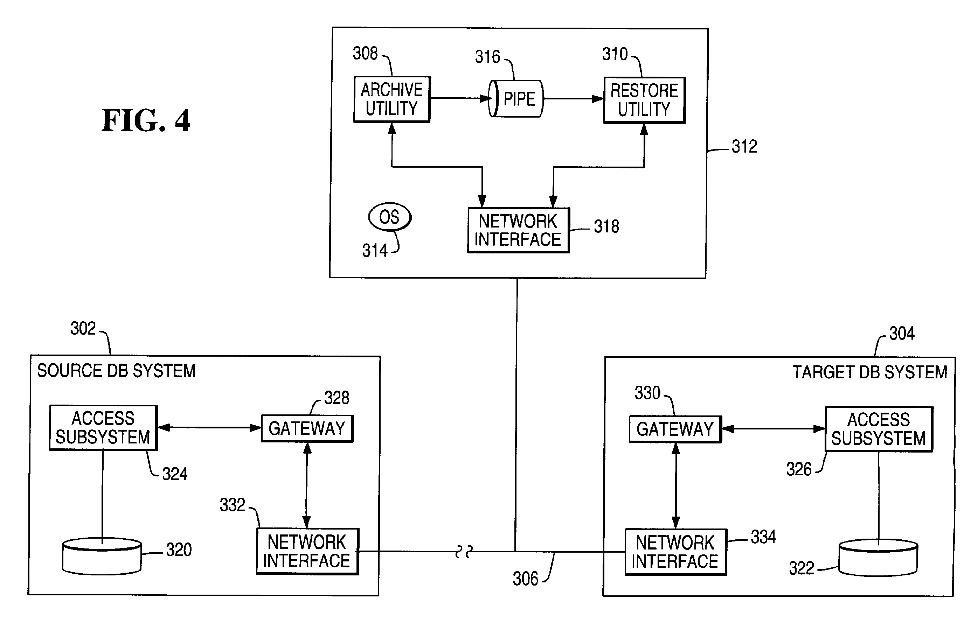

Fig. 4 shows yet another embodiment of a data migration system in which an archive utility and a restore utility are resident on an intermediate system 312 (e.g., a client terminal or network-attached client node) that is separate from both a source database system 302 and a target database system 304. The intermediate system 312 further includes an operating system 314 that provides for the creation of a transfer medium 316 (e.g., a UNIX pipe) between the archive and restore utilities 308 and 310. A network interface 318 enables communication with a data network 306, which also couples the source database system 302 and target database system 304. Each of the source and target database systems 302 and 304 includes a storage module 320 or 322, an access subsystem 324 or 326, a gateway 328 or 330, and a network interface 332 or 334.

In an alternative embodiment, the intermediate system 312 has two network interfaces to connect to two different networks: one to the source database system 302 and the other to the target database system 304. Also, alternatively, plural intermediate systems can be used for concurrency.

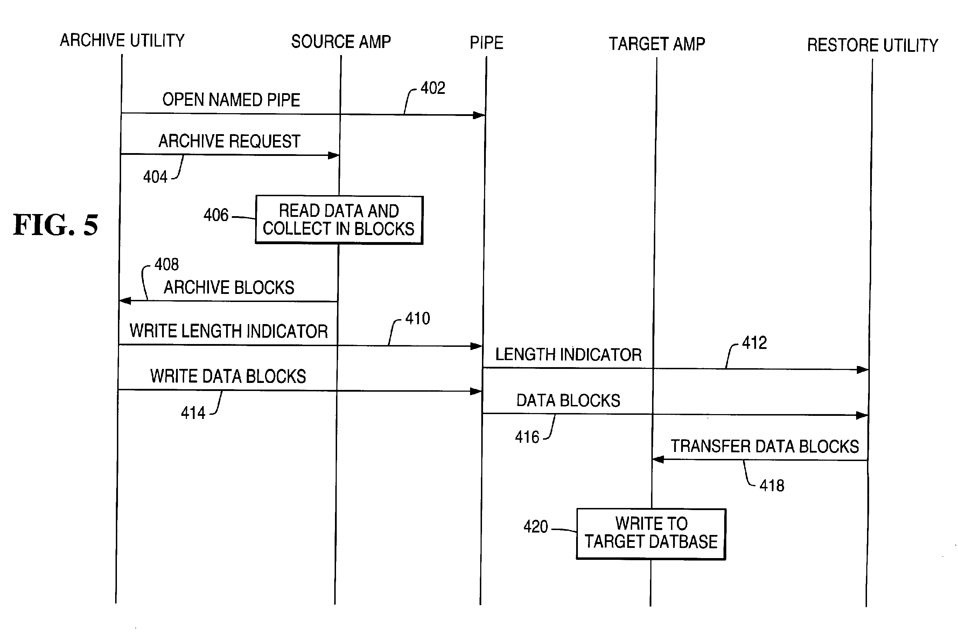

Fig. 5 illustrates messages exchanged between various entities involved in the migration of data from a source database system to a target database system. The flow is applicable to each of the various embodiments described above.

An archive operation is started in response to a user directive, such as from the client application 74 in the client terminal 70 (Fig. 1). In response to the archive directive, the archive utility module is instantiated followed by instantiation of the restore utility module. The archive utility module opens (at 402) a pipe, which as discussed above is used for the transfer of data between the archive utility module and the restore utility module. In creating a pipe in the UNIX operating system, according to one example, a file descriptor for reading from the pipe and another file descriptor for writing to the pipe are created. The file descriptors enable the archive utility and restore utility modules to write to and read from, respectively, the pipe.

After the pipe has been created, the archive utility module sends (at 404) an archive request, in a defined session, to the source access module processor (AMP). Although a single access module processor is described in this example, it is noted that plural access module processors may be involved. The request contains a table identifier to identify the table that needs to be archived. Upon receiving the archive request, the source access module processor recognizes the database access operation as an archive operation. The source access module processor then reads (at 406) data from the source database and collects the data into parcels, with each parcel varying in size, up to a predetermined maximum size. If the database system includes plural access module processors, then each access module processor is responsible for a subset of a given table.

In one example, a parcel can contain a number of rows of the table that is being archived. In other embodiments, instead of data parcels, other data formats are used. The data to be archived (referred to as "archive data") includes both data contained in various relational tables in storage modules as well as the table definitions. Other information, such as views, macros, data dictionary directory, etc.) can also be archived.

The archive data parcels (including data, table definitions, and other information) are transferred (at 408) from the source access module processor to the archive utility module. The archive utility module then writes (at 410) a length indicator to the pipe. The length indicator contains a value that indicates the amount of archive data that is to be transferred to the restore utility module. The parcels are encapsulated in datablocks and transferred through the pipe. In one example, a length indicator is sent before each datablock so that the restore utility module will know how much data is in the next datablock. The length indicator can also specify an end-of-data indication to terminate the data transfer.

Once the restore utility module is instantiated, it continuously monitors the pipe for data from the archive utility module. When the restore utility module detects (at 412) the length indicator (which has a header with a special flag), the restore utility module knows that archive datablocks are going to be coming over the pipe. The archive utility module writes (at 414) datablocks to the pipe, with the restore utility module reading the datablocks (at 416) from the pipe. The restore utility unblocks and unpacks the received datablocks into parcels for communication to the target access module processor.

In one embodiment, writing and reading is done in a "streaming" fashion, with the archive utility continuously writing to the pipe (as long as the pipe has not filled up), and the restore utility module continuously reading from the pipe. More generally, the pipe is one example of a transfer medium that communicates data in a stream, with the archive module writing data to one end of the stream and the restore module reading from another end of the stream. In some embodiments, the transfer medium is implemented with high-speed, volatile storage devices (such as integrated circuit or semiconductor memory devices), which are typically used for the main memory of most computer systems.

Both the archive utility module and the restore utility modules are active concurrently in performing the archive and restore operation. The terms "continuously" or "concurrently" as used here does not require that the archive and restore utility modules must both be writing and reading, respectively, at exactly the same time to and from the pipe. The archive and restore utility modules can actually access the pipe or other transfer medium in a time-shared manner. The significant aspect of some embodiments is that the archive and restore utility modules are both active to enhance data transfer efficiency.

The restore utility module then transfers (at 418) the parcels received from the pipe to the target access module processor. Next, the target access module processor writes (at 420) the rows contained in each parcel to the target database. When the archive operation is complete, the archive utility writes an end-of-data indicator to the pipe, which is subsequently read by the restore utility. Both archive and restore utilities then shut down and terminate.

In other embodiments, instead of an archive/restore procedure, a copy procedure can be performed between two database systems. The logic for copying is similar to archive/restore, except that in an archive/restore the attributes (table identifier, table name, etc.) of the restored database object stays the same, while some of the attributes change for a copy operation (e.g., new table identifier, new table name, etc.). As used here, the term "migrate" is intended to cover both archive/restore and archive/copy. More generally, the term "migrate" is also intended to cover any transfer of data between a first system and a second system. Whether the operation is an archive/restore, an archive/copy, or another type of transfer, the concept of a first utility to pull data from a source database and a second utility to push data into a target database, with a transfer medium between the first and second utilities, is maintained. As used here, although reference is made to "archive" or "restore" utilities, the archive and restore utilities can be used in archive/copy and other transfer operations in addition to archive/restore operations.

Also, alternatively, instead of running just a single archive or restore utility in each node shown in Figs. 1-4, plural archive or restore utilities can be executed in a node.

The various nodes and systems discussed each includes various software layers, routines, or modules. Such software layers, routines, or modules are executable on corresponding control units. Each control unit includes a microprocessor, a microcontroller, a processor card (including one or more microprocessors or microcontrollers), or other control or computing devices. As used here, a "controller" refers to a hardware component, software component, or a combination of the two. Similarly, a "processor" refers to a hardware component, a software component, or a combination of the two. "Controller" or "processor" can also refer to plural components (software, hardware, or a combination).

The storage devices referred to in this discussion include one or more machine-readable storage media for storing data and instructions. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs). Instructions that make up the various software routines, modules, or layers in the various devices or systems are stored in respective storage devices. The instructions when executed by a respective control unit cause the corresponding node or system to perform programmed acts.

The instructions of the software routines, modules, or layers are loaded or transported to each node or system in one of many different ways. For example, code segments including instructions stored on floppy disks, CD or DVD media, a hard disk, or transported through a network interface card, modem, or other interface device are loaded into the device or system and executed as corresponding software routines, modules, or layers. In the loading or transport process, data signals that are embodied in carrier waves (transmitted over telephone lines, network lines, wireless links, cables, and the like) communicate the code segments, including instructions, to the device or system. Such carrier waves are in the form of electrical, optical, acoustical, electromagnetic, or other types of signals.

While the invention has been disclosed with respect to a limited number of embodiments, those skilled in the art will appreciate numerous modifications and variations therefrom. It is intended that the appended claims cover such modifications and variations as fall within the true spirit and scope of the invention.

## Claims

1. A system comprising:
one or more control units;
a transfer medium;
a first module executable on the one or more control units to receive data for archiving from a first database, the first module to communicate the received data to the transfer medium; and
a second module executable on the one or more control units to receive data from the transfer medium and to transfer the received data into a second database.

2. The system of claim 1, wherein the first and second modules are concurrently active.

3. The system of claim 2, wherein the transfer medium comprises a buffer, the first module to write to the buffer and the second module to read from the buffer.

4. The system of claim 2, wherein the transfer medium is adapted to communicate data in a stream, the first module to provide the data to one end of the stream and the second module to receive data on another end of the stream.

5. The system of claim 1, wherein the transfer medium comprises any one of a first-in-first-out buffer, a UNIX pipe, a shared memory or one or more high-speed volatile storage devices.

6. The system of claim 1, wherein the first module comprises an archive utility and the second module comprises a restore utility.

7. The system of claim 1, the first module being executable to further provide an indication of an amount of archive data to transfer through the transfer medium.

8. The system of claim 1, further comprising plural nodes, the first and second module resident on each of the plural nodes.

9. The system of claim 8, wherein the plural nodes are part of a source database system in which the first database is contained.

10. The system of claim 8, wherein the plural nodes are part of a target database system in which the second database is contained.

11. The system of claim 1, further comprising at least one interface to a first database system containing the first database and to a second database system containing the second database.

12. The system of claim 1, the first module executable to request at least a portion of a relational table from the first database to archive.

13. The system of claim 12, the first module executable to send requests to an access module in a source database system containing the first database.

14. A system comprising:
a memory;
an archive module adapted to receive data from a first database and to write the data to the memory; and
a restore module adapted to receive the data from the memory and to transfer the data to a second database,
the archive and restore modules being concurrently active.

15. A method of migrating data from a first database to a second database, comprising:
executing an archive module to read archive data from a first database;
writing, by the archive module, the archive data to a memory;
executing a restore module;
reading, by the restore module, the archive data from the memory; and
transferring, by the restore module, the archive data to a second database.

16. The method of claim 15, wherein writing the data to the memory comprises writing the data to one of a first-in-first-out buffer, a shared memory, and a pipe.

17. The method of claim 15, wherein the archive module and restore module are executed concurrently.

18. An article comprising at least one storage medium containing instructions that when executed cause a system to:
archive data from a first database;
transfer the archived data to a buffer;
receive the archived data from the buffer; and
restore the archived data to a second database.

19. The article of claim 18, wherein the instructions when executed cause the system to concurrently perform the archive and restore acts.

20. The article of claim 18, wherein the instructions when executed cause the system to transfer the archived data through a pipe.

21. The article of claim 18, wherein the instructions when executed cause the system to archive the data using plural processors and restore the data using plural processors.

22. A system comprising:
an operating system;
a pipe managed by the operating system;
an archive module; and
a restore module,
the archive module adapted to transfer archive data from a first database to the pipe, and
the restore module adapted to receive the archive data from the pipe and to restore the received archive data into a second database,
the archive and restore modules being concurrently active in the system.
